# EUROPÄISCHE PATENTSCHRIFT

(11) **EP 1 026 132 B1**
(45) Veröffentlichungstag und Bekanntmachung des Hinweises auf die Patenterteilung: **17.12.2003**
(21) Anmeldenummer: 99102143.7
(22) Anmeldetag: 03.02.1999
(51) Int. Cl.: C04B 28/02, C04B 26/14

(54) **Schalldämmender, rutschhemmender Wärmedämmestrich**
Sound-proof, anti-slip heat insulation flooring
Chape thermiquement isolante, anti-derapante et insonorisante

(43) Veröffentlichungstag der Anmeldung: 09.08.2000
(73) Patentinhaber: Lind, Dieter, 64347 Griesheim (DE)
(72) Erfinder: Lind, Dieter, 64347 Griesheim (DE)
(74) Vertreter: Eisenführ, Speiser & Partner

(56) Entgegenhaltungen:
- EP-A- 0 665 195
- DE-A- 2 163 491
- DE-A- 3 209 488
- DE-A- 4 420 507
- DE-A- 4 426 654
- DE-A- 19 708 991
- DE-A- 19 805 365
- DE-U- 9 017 717
- FR-A- 2 525 586
- CHEMICAL ABSTRACTS, vol. 103, no. 22, 2. Dezember 1985 Columbus, Ohio, US; abstract no. 182784j, SEKISUI PLASTICS: "compositions for coating building walls" XP000183790 & JP 60 108381 A13. Juni 1985

## Beschreibung

Diese Erfindung betrifft Estrich zusammensetzungen, bei denen der übliche Zuschlag teilweise oder vollständig durch ein Gemisch aus Glas- und Kunststoffteilchen ersetzt ist und der schalldämmende, wärmedämmende und rutschhemmende Eigenschaften und eine hohe Festigkeit aufweist.

Aus der Literatur sind verschiedene Zuschläge für Beton bekannt. Glas- bzw. SiO₂ wird gelegentlich in Form von Altglas als künstlicher Zuschlag, in Form von Fasern als Bewehrung oder in Form von Betonglas für die Herstellung von Glasstahlbeton verwendet (Beton, Arten-Herstellung-Eigenschaften, Weigler/Karl, 1989, Berlin, S. 440). In Form von Glas-Bubbles findet Glas im Straßenbau Verwendung (Möglichkeiten zur Erzielung einer Frost-Tausalz-Beständigkeit des Betons durch besondere Verfahren - ohne Zusatz von Luftporenbildnern, Gerlinger, E., Springenschmidt, R., Bonn, 1985). Ferner ist bekannt, daß durch kugelförmige Stäube mit hohem Glasanteil, wie z.B. Microsilica hohe Betonfestigkeiten erzielt werden können (Cement Chemistry, H.F.W. Taylor, 1997, London, S. 284).

In der Betontechnologie werden auch Kunststoffe als Zuschlag erwähnt. Kunststoff wird als Leichtzuschlag in Form von Kunststoffschaumkugeln (Weigler/Karl, Beton, Arten-Herstellung-Eigenschaften, 1989, Berlin, S. 64) oder in Form von hohlen, kleinen Plastikkugeln verwendet (Möglichkeiten zur Erzielung einer Frost-Tausalz-Beständigkeit des Betons durch besondere Verfahren - ohne Zusatz von Luftporenbildnern, Gerlinger, E., Springenschmidt, R., Bonn, 1985). In dieser Veröffentlichung wird weiterhin ein Beton beschrieben, bei dem zur Erzielung einer Frost-Tau-Salzbeständigkeit u.a. als Zusatz kleine, hohle Kunststoffkugeln mit einem Durchmesser von 10 - 60 µm in Verbindung mit Glas-Bubbles verwendet werden. Dieser Beton weist keine ausreichende Rutschfestigkeit auf, da die hohlen Kunststoffteilchen bei direkter Belastung einknicken und in kürzester Zeit verschleißen. Auch die Festigkeit sowie die wärme- und schalldämmenden Eigenschaften dieses Betons sind nicht ausreichend und er ist nicht in der Lage, eine ausreichende Festigkeit zu erzielen.

Im deutschen Patent DE 19615298 sind als Stand der Technik rutschfeste Bodenbeläge beschrieben, wobei die Rutschfestigkeit durch Zugabe körniger Partikel aus Quarzsand oder Basaltsplit zum Bindemittel erreicht wird (Spalte 1, Z. 12 - 19). Als Erfindung ist ein Bodenbelag aus Bindemittel auf Kunststoff-Basis offenbart, worin kugelförmige, kantenfreie und gerundete Glaspartikel (Durchmesser 100 - 400µm) eingestreut sind (s. Ansprüche 1 bis 4). Als Bindemittel kann z.B. Epoxidharz verwendet werden. Bei der Herstellung des Bodenbelags werden die Glaspartikel auf die Estrichoberfläche gestreut.

DE 36 03 664 offenbart einen Fußbodenbelag aus Kunststoff-Bindemittel, das mit einem Granulat vermischt ist und der auf einen Estrich oder Betonuntergrund aufgebracht wird. Als Granulat können Kugeln annähernd gleichen Durchmessers aus Metall, vorzugsweise Stahl, Glas oder Kunststoff (Durchmesser 2-10 mm) eingesetzt werden. Hohlräume zwischen den Körnern, wie sie hier zwingend notwendig sind, sind erfindungsgemäß zu vermeiden, ja sogar schädlich.

Es ist zwar nach dem Stand der Technik möglich, mit Kunststoffschaumkugeln einen Wärmedämmleichtbeton herzustellen, jedoch weist dieser nur eine geringe Festigkeit und Steifigkeit auf (Weigler/Karl, Beton, Arten - Herstellung - Eigenschaften, 1989, Berlin, S. 64), was zwangsläufig eine geringe Betonfestigkeit mit sich bringt.

Die zitierten Patente und Literaturstellen beschreiben insgesamt nicht die Probleme der Wärmedämmung und Schalldämmung des Bodenbelags mit Hilfe von Kunststoffteilchen. Es ist nach dem Stand der Technik nicht möglich, einen Estrich oder Beton herzustellen, der verbesserte wärmedämmende, schalldämmende und rutschhemmende Eigenschaften und gleichzeitug eine hohe Festigkeit aufweist.

Ziel der Erfindung ist es daher, eine Estrich zusammensetzung, welche aus einem Bindemittel, Zuschlag, gegebenenfalls Wasser oder einer wässerigen Salzlösung und wahlweise Zusätzen besteht, bereitzustellen, die rutschhemmende, wärme- und schalldämmende Eigenschaften aufweist und gleichzeitig eine hohe Festigkeit besitzt.

Dieses Ziel wird erfindungsgemäß durch die Zurammerisettung nach Anspruch 1 erreicht.

### Ausführliche Bechreibung der Erfindung

Unter Estrich vesteht man nach DIN ein auf einem tragenden Untergrund oder auf einer zwischenliegenden Trenn- oder Dämmschicht hergestelltes Bauteil, das unmittelbar als Boden nutzfähig ist oder mit einem Belag, gegebenenfalls frisch in frisch versehen werden kann (DIN 18560). Estrichmörtel wird aus Zement, Sand, Wasser und Zusatzmitteln hergestellt.

Trotz der Verwandtheit der Estrichtechnologie zur Betontechnologie gibt es gravierende Unterschiede. Während die Zuschlagstoffe im Beton eine Körnung von 0 - 32 mm aufweisen, werden Estriche mit einer Körnung von 0 - 8 mm hergestellt.

Die Herstellung eines erfindungsgemäß verbesserten Estrichs erfolgt, indem die herkömmlichen Zuschläge teilweise oder vollständig durch eine den Bedürfnissen angepaßte, aus Glas und Kunststoff vollmaterial bestehende Granulatmischung, ersetzt werden, wobei als Bindemittel zement. Anhydritbinder Reakitionsharze oder Kaustische Magnesia oder Mischungen hiervor vermendet werden Als Glas wird kantiges Vollmaterial mit einem Größtkorn von 0,063 - 8 mm, bevorzugt 2 - 8 mm, eingesetzt; bei Reaktionsharzen als Bindemittel beträgt das Größtkorn 0,5-3,5 mm, wobei Teilchen kleiner oder gleich 0,2 mm, bevorzugt kleiner gleich 0,25 mm, weitgehend vermieden werden sollen. Als Kunststoff wird kugeliges oder kantiges Vollmaterial mit einem Größtkorn von 0,063 - 8 mm eingesetzt. Bevorzugte Größtkorn-Größen sind 0,5 - 5 mm, bei Reaktionsharzen als Bindemittel 0,125 - 3,5 mm, bevorzugt kleiner 0,5 mm.

Als Bindemittel werden erfindungsgemäß Zement, Anhydritbinder, Reaktionsharze oder kaustische Magnesia verwendet werden.

Mit Hilfe der erfindungsgemäßen Mischung wird eine hochfeste Estrichstruktur hergestellt, die mit Schwachstellen durchsetzt ist. Die Schwachstellen werden durch das geringe Elastizitätsmodul der Kunststoffteilchen erzeugt. Diese verleihen dem Estrich seine besonderen wärmedämmenden, schalldämmenden und rutschhemmenden Eigenschaften, führen aber auch zu gravierenden Festigkeitseinbußen des Estrichs .

Durch die Verwendung von Vollmaterial bei den Kunststoffen können direkte Belastungen sehr gut ertragen werden, so daß der gute Rutschhemmungseffekt lange erhalten bleibt. Bei Kunstharzen als Bindemitteln ist aus Gründen der Verarbeitbarkeit eine möglichst gedrungene, kompakte Form zu wählen.

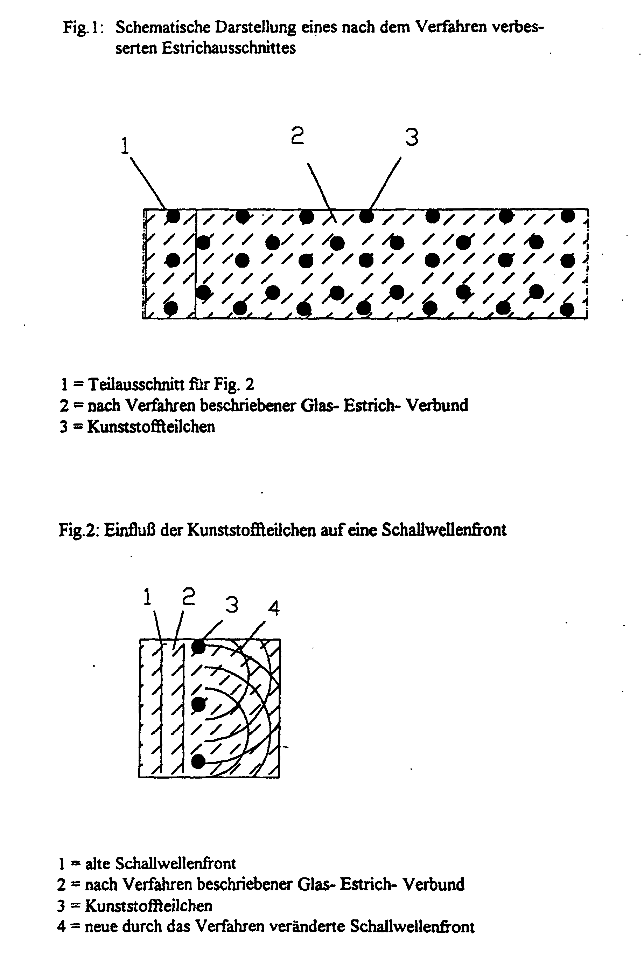

Durch Verwendung eines Kunststoffgranulats hoher Masse wird eine hohe Schalldämmung erreicht. Der mechanische Verlust der Schallwellen steigt durch die stärkere Dämpfung des verwendeten Kunststoffgranulats. Abb. 2 zeigt den Einfluß der Kunststoffteilchen auf eine Schallwellenfront.

Das eingesetzte Kunststoffgranulat, beispielsweise Recyclat, bewirkt weiterhin eine gute Wärmedämmung der Estrich- zusammensetzung.

Als Kunststoffe können beispielsweise Thermoplaste, Duroplaste, Elastomere und/oder Silicone eingesetzt werden.

Das erfindungsgemäß eingesetzte Glasgranulat bewirkt dagegen eine erhebliche Erhöhung der Festigkeit des Estrichs. Das Glasgranulat dieser Erfindung besteht dabei aus kantigem und/oder gebrochenem Material mit einer Größtkorngröße im oben angegebenen Bereich.

Abb. 1 zeigt einen erfindungsgemäßen Estrich.

Die Wirkungsweise des erfindungsgemäß hergestellten Estrichs basiert auf dem System der Versagensmechanismen von Komponentenwerkstoffen (z.B. Beton). Wird ein Komponentenwerkstoff auf Druck belastet, so entstehen in den Zuschlagskörnern und in der sie unmittelbar umgebenden Matrixschicht eine Verteilung von Druck- und Zugspannungen, von denen allein die Zugspannungen die Ursache für die als erste Zerstörung des Komponentenwerkstoffs auftretende Mikrorißbildung bei zunehmender Belastung sind (M. Lusche, Bruchmechanik in Schriftenreihe Zementindustrie, 1972, S. 81). Durch den Einsatz der erfindungsgemäßen Mischung aus Glasgranulat und Kunststoffgranulat wird das Tragverhalten von herkömmlichen Estrichen und ähnlichen Bauteilen erheblich verbessert. Ein Grund daür liegt dabei in der höheren Zugfestigkeit und Druckfestigkeit des Glases gegenüber herkömmlichen Zuschlagstoffen. So liegt die Zugfestigkeit von Glas (A. Petzold, Der Baustoff Glas, 3. Auflage, S. 35 u 36) zwischen 30 und 4*10³ MN/m², in Abhängigkeit von der größe und Beschaffenheit der Glasteilchen. Die Zugfestigkeit herkömmlicher Zuschlagstoffe liegt zwischen 6 und 14 MN/m² (F. Großmann, Dissertation, 1987, Essen). Die Druckfestigkeit des Zuschlagstoffs Glas liegt zwischen 400 - 2000 MN/m², in Abhängigkeit von der Größe und Beschaffenheit der Glasteilchen. Die Druckfestigkeit herkömmlicher Zuschlagstoffe liegt zwischen 70 - 400 MN/m².

Durch die Verwendung von kantigem oder gebrochenem Glasgranulat wird eine weitere Festigkeitssteigerung bewirkt [, da bei kantigen Zuschlägen eine vermehrte Bildung von Zugverzahnungen und Scherverbünden auftritt (D. Schneider, Experimentelle und analytische Untersuchung zur wirklichkeitsnahen Bestimmung der Bruchschnittflächen unbewehrter Bauteile unter Zugbeanspruchung, Berlin, 1987).]

Im Gegensatz zu den meisten Kristallen führt das fehlende Kristallgitter von Glas zu einer amorphen Isotropie, welche sich günstig auf die Eigenschaften des Estrichs auswirkt.

Ferner finden bei einigen Bindemitteln zwischen dem Glasgranulat und dem Bindemittel zusätzliche, festigkeitssteigernde Reaktionen statt. Insbesondere durch die Feinanteile der Granulatmischung läßt sich auch die Matrix in ihrer Festigkeit verbessern.

Die erfindungsgemäß hergestellten Estriche oder Bauteile mit verbesserten rutschhemmenden, wärme- und schalldämmenden Eigenschaften können herkömmliche Estriche oder Bauteile bei weitem an Druckfestigkeit übersteigen.

Verschiedene Gläser reagieren mit den Alkalien des Zements. Die damit verbundene Volumenvergrößerung kann zu Zerstörungen führen. Die Beständigkeit von Gläsern gegenüber Beton kann z.B. nach den amerikanischen Prüfvorschriften Astm C 289 - Test for potential reactivity of aggregates (Chemical method) und Astm C 227 - Test for potential alkali reactivity of cement-aggregate combinations (mortar-bar method) überprüft werden.

Bei der vorliegenden Erfindung ist es einerseits möglich, alkalibeständiges Glas zu verwenden. Andererseits kann in trockener Umgebung (z.B. in Innenräumen), wo Umwelteinflüsse die Reaktionen zwischen dem Glas und den Alkali-Verbindungen weniger beeinflussen, diese Reaktion verlangsamt oder gestoppt werden. Daher können in trockenen Innenräumen erfindungsgemäß auch nicht alkalibeständige Gläser in Estrichen verwendet werden.

Der in seinen Eigenschaften verbesserte, erfinderische Estrich hat seine Haupteinsatzbereiche im Wohnungsbau, in Büros, im Hochhausbau, in der Altbausanierung und überall dort, wo ein rutschhemmender, wärme- und schalldämmender Bodenbelag mit hoher Festigkeit benötigt wird, beispielsweise auch zur Schallpegelreduzierung in Industriegebäuden.

Durch die Wahl verschiedenfarbiger Kunststoffe kann der Estrich optisch aufgewertet werden. Dadurch können optisch wesentlich attraktivere Estriche hergestellt werden.

Die Herstellung des erfinderischen Estrichs unterscheidet sich von der herkömmlicher Estriche in folgender Weise:

Anstelle der Zugabe von Sand wird ein Gemisch aus Glas, Sand und Kunststoff zugegeben. Dabei ist mit einem erhöhten Wasseranspruch von zusätzlich ca. 5% zu rechnen. Der Estrich läßt sich wie ein herkömmlicher Estrich weiterverarbeiten. Beim verwendeten Kunststoff ist vorher die Verträglichkeit zu überprüfen.

Die erfinderischen Zuschläge können folgende Volumenanteile, bezogen auf die Gesamtmenge an Zuschlägen, aufweisen:

| | |
|---|---|
| Glas | 1-99 Vol.-% |
| Kunststoff | 1-95 Vol.-% |
| Herkömmlicher Zuschlag | 0-95 Vol.-% |

Bevorzugte Bereiche sind:

| | |
|---|---|
| Glas | 30 -70 Vol.-% |
| Kunststoff | 7 -50 Vol.-% |
| Herkömmlicher Zuschlag | 0-63 Vol.-% |

Das Verhältnis von Zuschlägen zu Bindemitteln bzw. von Zuschlägen, bezogen auf die Gesamtzusammensetzung, entspricht dem herkömmlicher Estrich- oder Betonzusammensetzungen.

### Beispiele

1.) Ein nach dem Patent verbesserte Industrie-Nutzestrich besteht beispielsweise aus folgenden Zuschlägen, bezogen auf die Gesamtmenge an Zuschlag:
   25 Vol.-% Polyethylen geringer Dichte (PE-LD) als Kunststoffgranulat, kantig, Vollmaterial, Größtkorndurchmesser 5 mm, Rohdichte 0,92kg/l.
   60 Vol.-% Glas, kantig, gebrochen, Sieblinie 0 - 8 mm, Rohdichte 2,5 kg/l.
   15 Vol.-% Sand, Sieblinie 0 - 8 mm.

   Die Sieblinie der Zuschläge Glas und Sand verläuft ähnlich herkömmlichen Sieblinien, jedoch enthält sie mehr Feinstanteile.
   Das Volumenverhältnis von Zuschlägen zu Zement beträgt 4,4/1. Das entsprechende Verhältnis bei einem herkömmlichen Estrich (ZE 40) beträgt 4,6/1.
   Anmachwasser: w/z = 0,36; Rohdichte 1,0.
2. Anwendungsbeispiel Kunststoffestrich
   Als Bindemittel wird eine Epoxid-Flüssigharz-Kombination verwendet. Die Estrichdicke beträgt 8 bis 15 mm. Der Estrich besteht aus folgenden Zuschlägen, bezogen auf die Gesamtmenge an Zuschlag:
   60 Vol.-% Polystyrol als Kunststoffgranulat, rund, Größtkorndurchmesser 3,5 mm;
   40 Vol.-% Glas.

## Patentansprüche

1. Estrichzusammensetzung, enthaltend Bindemittel, gegebenenfalls Wasser oder eine wässerige Salzlösung, gegebenenfalls Zusätze, wobei in der Estrichzusammensetzung zumindest ein Gemisch aus Kunststoffvollmaterial und aus kantigem und/oder gebrochenem Glasvollmaterial als Zuschlagstoff enthalten ist, wobei als Bindemittel Zement, Anhydritbinder, Reaktionsharze oder kaustische Magnesia oder Mischungen hiervon verwendet werden.

2. Zusammensetzung nach Anspruch 1, **dadurch gekennzeichnet, dass** die Zuschlagstoffe in folgenden Volumenanteilen, bezogen auf die Gesamtmenge an Zuschlägen, enthalten sind:
- Glas 1-99 Vol.-%
- Kunststoff 1-95 Vol.-%
- Herkömmlicher Zuschlag 0-95 Vol.-%.

3. Zusammensetzung nach Anspruch 1 oder 2, **dadurch gekennzeichnet, dass** die Zuschlagstoffe in folgenden Volumenanteilen, bezogen auf die Gesamtmenge an Zuschlag, enthalten sind:
- Glas 30 - 70 Vol.-%
- Kunststoff 7 -50 Vol.-%
- Herkömmlicher Zuschlag 0 -63 Vol.-%.

4. Zusammensetzung nach einem oder mehreren der vorhergehenden Ansprüche,
**dadurch gekennzeichnet, dass** sie als herkömmliche Zuschlagstoffe Sand, organische Füllstoffe und/oder Leichtzuschlagstoffe enthält.

5. Zusammensetzung nach einem oder mehreren der vorhergehenden Ansprüche,
**dadurch gekennzeichnet, dass** als Zusätze Konservierungsmittel, Farbstoffe oder organische Stoffe oder Mischungen hiervon enthalten sind.

6. Zusammensetzung nach einem oder mehreren der vorhergehenden Ansprüche,
**dadurch gekennzeichnet, dass** als Glaszuschlag Glas mit einem Größtkorndurchmesser von 0,063 mm bis 8 mm enthalten ist.

7. Zusammensetzung nach einem oder mehreren der vorhergehenden Ansprüche,
**dadurch gekennzeichnet, dass** als Kunststoffzuschlag runder oder kantiger Vollmaterial-Kunststoff mit einem Größtkomdurchmesser im Bereich von 0,063 mm bis 8 mm enthalten ist.

8. Zusammensetzung nach Anspruch 7,
**dadurch gekennzeichnet, dass** als Kunststoffe Duroplaste, Thermoplaste, Elastomere und/oder Silicone enthalten sind.

9. Zusammensetzung nach Anspruch 7 oder 8, **dadurch gekennzeichnet, dass** als Kunststoffe Polyethylen geringer Dichte (PE-LD), Polymethyl-Methacrylat, Polypropylen, Polystyrol, PVC und/oder Epoxidharze enthalten sind.

10. Verfahren zur Herstellung einer Estrichzusammensetzung nach einem oder mehreren der vorhergehenden Ansprüche,
**dadurch gekennzeichnet, dass** die einzelnen Bestandteile der Zusammensetzung in an sich bekannter Weise vermischt werden, wobei die herkömmlichen Zuschläge teilweise oder vollständig durch ein Gemisch aus Kunststoff- und Glasgranulat ersetzt werden.

11. Verfahren nach Anspruch 10, bei dem die Zuschläge in folgenden Volumenanteilen zugegeben werden:
| | |
|---|---|
| Glas | 1-99 Vol.-% |
| Kunststoff | 1-95 Vol.-% |
| Herkömmlicher Zuschlag | 0-95 Vol.-%. |

## Claims

1. Screed composition, containing binder, if necessary water or an aqueous salt solution, if necessary additives, whereby in the screed composition at least a mix of plastic filler and of angular and/or broken glass filler material is contained as aggregate, whereby cement, anhydrite binders, reaction resins or caustic magnesia or mixtures thereof are used.

2. Composition according to Claim 1, **characterized in that** the aggregates are contained in the following volume percents, in relation to the total quantity of aggregates:
- Glass 1-99 vol. %
- Plastic 1-95 vol. %
- Conventional aggregate 0-95 vol. %

3. Composition according to Claim 1 or 2, **characterized in that** the aggregates are contained in the following volume percents, in relation to the total quantity of aggregate:
- Glass 30-70 vol. %
- Plastic 7-50 vol. %
- Conventional aggregate 0-63 vol. %

4. Composition according to one or more of the preceding claims,
**characterized in that** it contains as conventional aggregates sand, organic fillers and/or lightweight aggregates.

5. Composition according to one or more of the preceding claims,
**characterized in that** protective agents, dyestuffs or organic substances or mixtures thereof are contained as additives.

6. Composition according to one or more of the preceding claims,
**characterized in that** glass with a maximum grain diameter of 0.063 mm to 88 mm is contained as glass aggregate.

7. Composition according to one or more of the preceding claims,
**characterized in that** round or angular 100% plastic with a maximum grain diameter in the range from 0.063 mm to 8 mm is contained as plastic aggregate.

8. Composition according to Claim 7,
**characterized in that** thermosetting plastics, thermoplastics, elastomers and/or silicones are contained as plastics.

9. Composition according to Claim 7 or 8,
**characterized in that** low-density polyethylene (PE-LD), polymethylmethacrylate, polypropylene, polystyrene, PVC and/or epoxy resins are contained as plastics.

10. Method for production of a screed composition according to one or more of the preceding claims,
**characterized in that** the individual constituents of the composition are mixed in a known way, whereby the conventional aggregates are replaced in part or fully by a mix of plastic and glass granulate.

11. Method according to Claim 10, with which the aggregates are mixed in the volume percents:
- Glass 1-99 vol. %
- Plastic 1-95 vol. %
- Conventional aggregate 0-95 vol. %

## Revendications

1. Composition pour chape de béton contenant un liant, le cas échéant de l'eau ou une solution saline aqueuse, le cas échéant des adjuvants, la composition pour chape de béton contenant comme agrégats au moins un mélange de matériau solide en plastique et de matériau solide en verre à arêtes vives et/ou broyé, le liant utilisé étant du ciment, du mortier à base d'anhydrite, des résines composites ou de la magnésie caustique, ou des mélanges de ces derniers.

2. Composition selon la revendication 1, **caractérisée en ce que** les agrégats sont présents dans les proportions en volume suivantes par rapport à la quantité totale d'agrégats :
- verre 1 à 99% en volume
- plastique 1 à 95% en volume
- agrégats habituels 0 à 95% en volume

3. Composition selon la revendication 1 ou 2, **caractérisée en ce que** les agrégats sont présents dans les proportions en volume suivantes par rapport à la quantité totale d'agrégats :
- verre 30 à 70% en volume
- plastique 7 à 50% en volume
- agrégats habituels 0 à 83% en volume

4. Composition selon l'une ou plusieurs des revendications précédentes, **caractérisée en ce qu'**elle contient comme agrégats habituels du sable, des charges organiques et/ou des agrégats légers.

5. Composition selon l'une ou plusieurs des revendications précédentes, **caractérisée en ce que** des conservateurs, des colorants ou des substances organiques sont présents comme adjuvants.

6. Composition selon l'une ou plusieurs des revendications précédentes, **caractérisée en ce que** du verre avec un diamètre maximum de 0,063 à 8 mm est présent comme agrégat verre.

7. Composition selon l'une ou plusieurs des revendications précédentes, **caractérisée en ce que** du plastique solide sphérique ou à arêtes vives avec un diamètre maximum dans la plage comprise entre 0,063 mm et 8 mm est présent comme agrégat plastique.

8. Composition selon la revendication 7, **caractérisée en ce que** des résines thermodurcissables, thermoplastiques, des élastomères et/ou des silicones sont présents comme plastiques.

9. Composition selon la revendication 7 ou 8, **caractérisée en ce que** des polyéthylènes basse densité (PEBD), du polyméthylmétacrylate, des polypropylènes, du polystyrène, du PVC et/ou des résines époxydes sont présents comme plastiques.

10. Procédé de fabrication d'une composition pour chape de béton selon l'une ou plusieurs des revendications précédentes, **caractérisé en ce que** les différents constituants de la composition sont mélangés d'une façon connue, les agrégats habituels étant partiellement ou complètement remplacés par un mélange de granulats en plastique ou en verre.

11. Procédé selon la revendication 10, **caractérisé en ce que** les agrégats sont ajoutés dans les proportions en volume suivantes :
| | |
|---|---|
| verre | 1 à 99% en volume |
| plastique | 1 à 95% en volume |
| agrégats habituels | 0 à 95% en volume |
